# EUROPÄISCHE PATENTSCHRIFT

(11) **EP 0 866 282 B1**
(45) Veröffentlichungstag und Bekanntmachung des Hinweises auf die Patenterteilung: **03.11.2004**
(21) Anmeldenummer: 98710003.9
(22) Anmeldetag: 03.03.1998
(51) Int. Cl.: F24D 19/10, G05D 23/19

(54) **Bedienvorrichtung für eine Brauchwassererwärmung**
Control device for a domestic water heating system
Dispositif de commande pour une installation de chauffage de l'eau sanitaire

(30) Priorität: 17.03.1997 DE 19710772
(43) Veröffentlichungstag der Anmeldung: 23.09.1998
(73) Patentinhaber: ROBERT BOSCH GMBH, 70442 Stuttgart (DE)
(72) Erfinder: Lochmahr, Gunnar, Dr., 71229 Leonberg (DE); Nothdurft, Gerhard, 73230 Kirchheim (DE)
(74) Vertreter: Lochmahr, Gunnar

(56) Entgegenhaltungen:
- EP-A- 0 356 609
- EP-A- 0 503 265
- GB-A- 2 132 791
- GB-A- 2 138 967
- US-A- 5 103 078

## Beschreibung

Die Erfindung geht aus von einer Bedienvorrichtung für eine Brauchwassererwärmung nach der Gattung des unabhängigen Anspruchs.

### Stand der Technik

Bekannt sind Heizungsanlagen mit einer Regelung wenigstens eines Heizkreises gemäß vorgegebenen Temperatursollwerten und Zeiträumen. Hierfür ist ein Normal- und ein Absenkbetrieb vorgesehen. In dem Heizkreis ist eine Brauchwassererwärmung mit Vorrangschaltung integriert, die während des Normalbetriebs aktiv ist. Zu Zeiten der Nachtabsenkungsphasen ist die Brauchwassererwärmung jedoch abgeschaltet. Eine gezielt einstellbare Vorwahl der Brauchwassertemperatur ist nicht vorgesehen.

Aus EP 503 265 A1 ist eine Bedienvorrichtung für ein Heizgerät mit einer Brauchwassererwärmung gemäß den Merkmalen des Oberbegriffs bekannt. Dabei weist das Heizgerät zwei Heizkreise auf, von denen einer unmittelbar an den Heizkessel und der zweite über einen Mischer an den Heizkessel angeschlossen ist. Dem Heizkessel ist ein Regler zugeordnet, dem wiederum eine Reihe von Ist-Wert-Gebern zugeordnet sind. Dem Regler werden über eine Programmwahltaste u. a. verschiedene Schaltzeiten für die Brauchwasserbereitung mit fest vorgegebenen Soll-Temperaturen vorgegeben. Dabei ist die Brauchwasserbereitung an die Heizkreise der Heizvorrichtung gekoppelt, wobei zu den verschiedenen Zeitpunkten mit fest eingestellten Temperatur die Aufladung des Brauchwasserspeichers erfolgt.

Aus GB 2 138 967 A ist eine Programmierung für eine Heizungsanlage bekannt, wobei ein Bedienfeld vorgesehen ist, mit dem für verschiedene Zeiten der Steuerung unterschiedliche Programme für die Brauchwassererwärmung und für die Heizkreiserwärmung zugeordnet werden.

Eine weitere Programmierung für einen Warmwasserbereiter ist aus US 5 103 078 bekannt, mit der jeder vorbestimmten Start-Stopp-Zeit innerhalb eines Zyklus gewünschte Temperaturen zuordenbar sind.

Ein selbstlernendes System eines Brauchwasserspeicher-Reglers, das sich den Benutzergewohnheiten anpasst, ist aus EP 356 609 A1 bekannt. Ein Soll-Wert-Geber enthält dabei einen Speicher, in dem für einzelne Zeitspannen unterschiedliche SollWerte für die Brauchwassertemperatur gespeichert sind. Ist die Temperatur im Brauchwasserspeicher zu einem bestimmten Zeitpunkt niedriger als der im Speicher gespeicherte Soll-Wert für diesen Zeitpunkt, so wird ein neuer Soll-Wert in den Speicher eingeschrieben, der höher ist als der bisherige Soll-Wert für diesen Zeitpunkt. Der Soll-Wert-Geber lernt somit, zu welchen Zeitpunkten innerhalb einer Kalenderwoche welche Soll-Temperaturen nötig sind.

Schließlich ist aus GB 2 132 791 A eine Vorrichtung zur Steuerung eines Warmwassersystems eine Heizungsanlage bekannt, bei der eine Mehrzahl von verschiedenen Wassertemperaturen und der Beginn verschiedener Zeitperioden in einem Speicher gespeichert sind, so dass die gewünschte Temperatur im Brauchwasserspeicher über die gesamte Zeitperiode aufrechterhalten werden kann.

### Vorteile der Erfindung

Die erfindungsgemäße Bedienvorrichtung für eine Brauchwassererwärmung weist eine Zeitvorgabe auf, um zumindest einen Zeitpunkt vorzugeben, zu dem eine Brauchwassererwärmung erfolgt. Sie zeichnet sich durch eine Solltemperaturvorgabe aus, wodurch zumindest eine Solltemperatur des Brauchwassers vorgebbar ist. Weiterhin ist eine Zuordnung vorgesehen, die dem Zeitpunkt die Solltemperatur zuweist. Die erfindungsgemäße Bedienvorrichtung ermöglicht eine zeitabhängige Vorgabe der Solltemperatur des Brauchwassers. Das Temperaturprofil läßt sich den verschiedenen Benutzergewohnheiten anpassen. Auf Aufwärmphasen des Brauchwassers zu solchen Zeiten, zu denen normalerweise mit keiner Benutzung zu rechnen ist, kann verzichtet werden. Dadurch läßt sich die mittlere Bereitstellungstemperatur reduzieren mit der Folge eines niedrigeren Energieverbrauchs. Brauchwasser- und Heizprogramm sind entkoppelt, so daß eine Bereitstellung von Warmwasser gewünschter Temperatur auch zu Zeiten mit abgeschaltetem Heizkreis möglich ist.

Dadurch lassen sich beliebige zeitliche Verläufe der gewünschten Solltemperatur des Brauchwassers realisieren. Das Verbraucherverhalten wird genau nachgebildet.

Die resultierende Treppenfunktion des Solltemperaturverlaufs erhöht die Bedienerfreundlichkeit, da die Solltemperatur für ein Zeitintervall der Bedienvorrichtung lediglich einmal mitgeteilt werden muß. Zudem läßt sich die Intervalldauer frei wählen.

Gemäß der Erfindung ist ferner eine Anzeige vorgesehen, in der Zeitpunkt und zugeordnete Solltemperatur dargestellt sind. Der Benutzer überblickt rasch die vorgenommenen Einstellungen. Anhand der Anzeige lassen sich leicht Korrekturen vornehmen.

In einer vorteilhaften Ausgestaltung ist ein Bedienelement vorgesehen, bei dessen Betätigung eine Aktivierung entweder der Aufheizung des Brauchwassers und/oder einer vorgebbaren maximalen Solltemperatur erfolgt. Der Benutzer kann jederzeit vorrangig das Automatikprogramm unterbrechen, um bei unvorhergesehenen Brauchwasseranforderungen schnell heißes Wasser entnehmen zu können. Die Parameter lassen sich speziell auf eine schnelle Brauchwasseranforderung abstimmen. Warte- und Bedienzeiten verringern sich.

In einer Weiterführung wird bei Betätigung des Bedienelements ein Timer gestartet und bei dessen Ablauf eine Inaktivierung der Aufheizung des Brauchwassers und/oder der vorgebbaren maximalen Solltemperatur vorgenommen. Der Benutzer muß keine weitere Bedienhandlung vornehmen, um vom Manuellbetrieb in den Automatikbetrieb zu wechseln.

Weitere vorteilhafte Ausgestaltungen ergeben sich aus der Beschreibung.

### Zeichnung

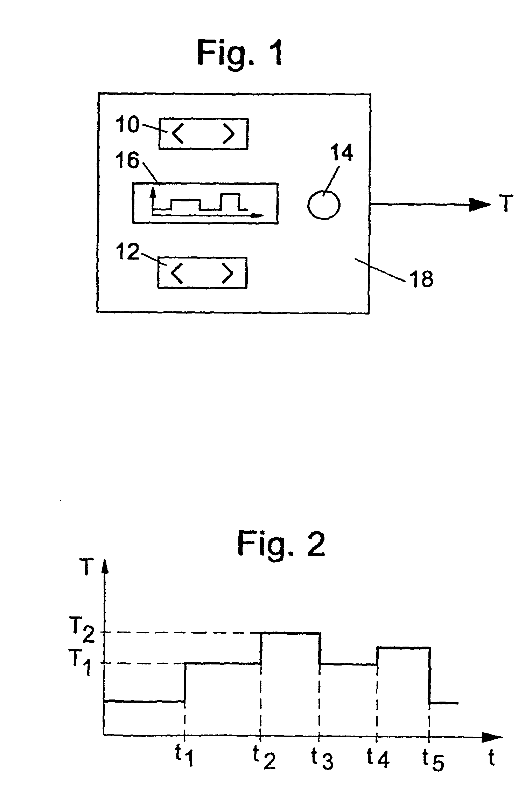

Es zeigen Figur 1 einen möglichen Aufbau und Figur 2 eine Anzeige eines möglichen Ausführungsbeispiels.

Zeitvorgabe 10, Solltemperaturvorgabe 12, Zuordnung 14 und Anzeige 16 sind Teile einer Bedienvorrichtung 18. Die Bedienvorrichtung 18 gibt eine Solltemperatur T ab. In der Anzeige 16 ist eine zeitabhängige Zuordnung der Solltemperatur T vorgenommen. Zu den Zeitpunkten t₁, t₂, t₃, t₄ und t₅ ändert sich die zugehörige Solltemperatur T. Zwischen den unmittelbar benachbarten Zeitpunkten t₁ ... t₅ bleiben die zugeordneten Solltemperaturen T₁... T₅ konstant.

Die Zeitvorgabe 10 legt die Zeitpunkte t₁, t₂ ... t₅ fest, zu denen eine Brauchwassererwärmung erfolgt. Diesen Zeitpunkten t₁ ... t₅ lassen sich gezielt durch Betätigen der Zuordnung 14 entsprechende Solltemperaturen T₁ ... T₅ des Brauchwassers zuordnen. Damit legt der Benutzer das gewünschte Brauchwassertemperaturniveau für den Tagesablauf fest. Die erste Solltemperatur T₁ ist gültig für das von erstem Zeitpunkt t₁ und zweitem Zeitpunkt t2 gebildete Zeitintervall. Analoges gilt für zweite und weitere Solltemperaturen T₂ ... T₅, die nicht notwendigerweise voneinander verschieden sein müssen. Grundsätzlich lassen sich beliebig viele Zeitpunkte t₁ ... t₅ vorgeben. Als Zeitvorgabe 10 dient beispielsweise eine Schaltuhr. Zudem kann die Einstellung der Zeitpunkte auch im Rahmen einer inkrementalen Veränderung digital erfolgen. Während des Einstellvorgangs der Zeitvorgabe 10 erfaßt die Anzeige 16 die entsprechenden Zeitpunkte t₁ ... t₅. Anhand der Anzeige 16 läßt sich die gewünschte Einstellung verifizieren. Der aktuell eingestellte Zeitpunkt t₁ wird in einem Speicher hinterlegt.

Diesem ist die entsprechende Solltemperatur T₁ zuzuordnen. Die hierfür notwendige Solltemperaturvorgabe 12 kann entweder analog oder digital ausgeführt sein. Der Benutzer stellt die gewünschte Solltemperatur T₁ des Brauchwassers ein. Die Anzeige 16 gibt in diesem Betriebsmodus die Solltemperatur T aus. Bei Betätigung der Zuordnung 14 wird die gewählte Solltemperatur T₁ in Abhängigkeit von dem gewünschten Zeitpunkt t₁ in einem Speicher hinterlegt. In gleicher Weise werden den noch einzustellenden Zeitpunkten t₂ ... t₅ die entsprechenden Solltemperaturen T₂ ... T₅ zugeordnet. Die Zeitpunkte t mit zugeordneten Solltemperaturen T können tagesabhängig unterschiedlich gewählt werden.

Die Zuordnung 14 ist als separates Bedienelement in der Bedienvorrichtung 18 integriert. Bei Betätigen erfolgt eine Zuweisung der gerade eingestellten Zeit- und Solltemperaturparameter. Auf ein separates Bedienelement kann verzichtet werden, wenn in einer festgelegten Zuweisungssequenz die Einstellung eines anderen Parameters als Zuordnung 14 interpretiert wird. Verändert beispielsweise ein Benutzer den Zeitpunkt t₁, wird dieser dann in einem Speicher hinterlegt, wenn eine erstmalige Betätigung der Solltemperaturvorgabe 12 erfolgt. Eine anschließende Bedienung der Zeitvorgabe 10 wird als Zuordnung 14 des vorher eingestellten und in einem Speicher hinterlegten Zeitpunkts t₁ zu der Solltemperatur T₁ interpretiert. Die Eingabereihenfolge kann vertauscht werden. Dann wird bei jedem Weiterschalten der Zeit die gerade eingestellte Solltemperatur T₁ dem Zeitpunkt t₁ zugeordnet. Bei der letzten Eingabe erfolgt die Zuordnung 14 automatisch nach Ablauf einer hinreichend großen Zeit.

Die Bedienvorrichtung 18 erkennt die aktuelle Uhrzeit. Wird der erste Zeitpunkt t₁ erreicht, generiert sie die voreingestellte Solltemperatur T₁, solange bis diese zum zweiten Zeitpunkt t₂ durch die zweite Solltemperatur T₂ abgelöst wird. Zu diesem Zweck wird zeitabhängig der aktuelle Solltemperatur T aus dem mittels der Uhrzeit adressierten Speicher ausgelesen und gegebenenfalls in einen analogen oder digitalen Sollwert umgesetzt. Die aktuellen, zeitabhängigen Solltemperaturen T der Bedienvorrichtung 18 werden beispielsweise über eine analoge Signalleitung oder ein Bussystem an ein Steuergerät der Heizanlage übermittelt. Das Steuergerät übernimmt die Brauchwassertemperaturregelung. Sie erfolgt beispielsweise über einen Zweipunkt-Regler, der die Brauchwassertemperatur innerhalb eines der aktuellen Solltemperatur T zugeordneten Temperaturbereichs hält. Bei Unterschreiten einer Temperaturuntergrenze veranlaßt die Steuerung beispielsweise das Füllen eines Warmwasserspeichers, bis dessen Temperaturniveau die Temperaturobergrenze des der Solltemperatur T zugeordneten Temperaturbands erreicht. Die Wärmezufuhr des Brauchwasserkreises erfolgt durch gezieltes Aufheizen des Heizkreises mit dem Wärmeaustausch über einen Wärmetauscher.

In einer alternativen Ausführungsform ist vorgesehen, als Zeitvorgabe 10 eine Schaltuhr für den Heizkreis zu verwenden. Über diese Schaltuhr lassen sich Heiz- und Absenkphasen einstellen. So kann beispielsweise gezielt dem ersten Zeitpunkt t₁, der den Beginn der Heizphase markiert, in Verbindung mit der Solltemperaturvorgabe 12 und der Zuordnung 14 die während dieser Phase gewünschte Solltemperatur T₁ zugewiesen werden.

Eine weitere Vereinfachung besteht darin, daß Zeitvorgabe 10 und Solltemperaturvorgabe 12 durch ein einziges Bedienelement realisiert werden. In einer vorgegebenen Parametriersequenz wird zuerst sowohl dem Bedienelement als auch der Anzeige 16 die Zeitvorgabefunktion zugeordnet. Der Benutzer stellt den ersten Zeitpunkt t₁ ein und quittiert seine Eingabe durch die Zuordnung 14. Daraufhin wird dem Bedienelement und der Anzeige 16 die Solltemperaturvorgabefunktion übertragen. Bei korrekter Eingabe der Solltemperatur T₁ wechselt die Bedienvorrichtung 18 nach Betätigung der Zuordnung 14 wieder selbsttätig in den Zeitvorgabemodus. Diese Bediensequenz wiederholt sich solange, bis alle gewünschten Zeitpunkte t₁ ... t₅ mit zugehörigen Solltemperaturen T₁ ... T₅ hinterlegt sind. Wird der Parametriermodus verlassen, macht die Anzeige 16 tagesabhängig die jeweilige zeitabhängige Solltemperaturvorgabe sichtbar. Der Automatikbetrieb läuft ab wie beschrieben.

In einem weiteren Ausführungsbeispiel kann der Automatikbetrieb kurzfristig manuell unterbrochen werden. Eine nicht im Solltemperaturprogramm hinterlegte sofortige Erwärmung des Brauchwassers wird durch Betätigung eines speziellen Bedienelements angestoßen. Die Bedienvorrichtung 18 gibt statt des im Automatikprogramm aktuellen Temperatursollwerts T entweder einen in einem Speicher hinterlegten Manuellbetrieb-Temperatursollwert oder lediglich einen Aufwärmbefehl für die Steuerung ab.

Der manuelle Eingriff kann automatisch zurückgesetzt werden, indem bei Betätigung des Bedienelements ein Timer gestartet wird. Bei dessen Ablauf wird in das Automatikprogramm zurückgewechselt.

Die Bedienvorrichtung 18 läßt sich sowohl für in einem Heizkreis integrierte Brauchwasseranlagen als auch für separate Warmwasserbereiter einsetzen.

## Patentansprüche

1. Bedienvorrichtung für eine Brauchwassererwärmung, mit einer Zeitvorgabe (10), über die mehrere Zeitpunkte (t₁ ... tₙ) vorgebbar sind, mit einer Solltemperaturvorgabe (12), zur Vorgabe einer Solltemperatur (T₁) für die Brauchwassererwärmung, mit einer Zuordnung (14), die den Zeitpunkten (t₁ ... tₙ) Solltemperaturen (T₁ ... Tₙ) zuweist, und mit einer Anzeige (16), in der die Zeitpunkte (t₁ ... tₙ)der Brauchwassererwärmung dargestellt ist, wobei die Brauchwassererwärmung in einer Heizanlage integriert ist und die Einstellung der Heizanlage und die Vorgabe des Zeitpunktes (t₁) über eine Zeitschaltung erfolgt, und wobei die dem ersten Zeitpunkt (t₁) zugeordnete Solltemperatur (T₁) bis zum unmittelbar darauffolgenden zweiten Zeitpunkt (t₂) gültig ist, **dadurch gekennzeichnet, dass** den Zeitpunkten (t₁ ... tₙ) jeweils gewünschte Solltemperaturen (T₁ ... Tₙ) zugeordnet sind, so dass das gewünschte Brauchwassertemperaturniveau für den Tagesablauf zu einzelnen Zeitpunkten (t₁ ... tₙ) festlegbar ist, und dass die Anzeige (16) zusätzlich tagesabhängig die jeweilige Solltemperatur darstellt.

2. Vorrichtung nach Anspruch 1, **dadurch gekennzeichnet, dass** ein Bedienelement vorgesehen ist, bei dessen Betätigung eine Aktivierung der Aufheizung des Brauchwassers und/oder einer vorgebbaren maximalen Solltemperatur erfolgt.

3. Vorrichtung nach Anspruch 2, **dadurch gekennzeichnet, dass** bei Betätigung des Bedienelements ein Timer gestartet ist und bei dessen Ablauf eine Deaktivierung der Aufheizung des Brauchwassers und/oder der vorgebbaren maximalen Solltemperatur erfolgt.

4. Vorrichtung nach Anspruch 1, **dadurch gekennzeichnet, dass** die Zuordnung (14) durch ein Bedienelement realisiert ist.

5. Vorrichtung nach Anspruch 1, **dadurch gekennzeichnet, dass** die Zuordnung (14) mit der abwechselnden Bedienung der Solltemperaturvorgabe (12) und der Zeitvorgabe (10) realisiert ist.

## Claims

1. Operating device for a domestic water heating system, with a time presetting (10) via which a plurality of time points (t₁ ... tₙ) can be preset, with a desired-temperature presetting (12) for presetting a desired temperature (T₁) for the domestic water heating system, with an allocator (14) which assigns desired temperatures (T₁ ... Tₙ) to the time points (t₁ ... tₙ), and with an indicator (16), in which the time points (t₁ ... tₙ) of the domestic water heating system are displayed, the domestic water heating system being integrated in a heating installation, and the setting of the heating installation and the presetting of the time point (t₁) taking place via time switching, and the desired temperature (T₁) assigned to the first time point (t₁) being valid until the immediately following second time point (t₂), **characterized in that** in each case required desired temperatures (T₁ ... Tₙ) are assigned to the time points (t₁ ... tₙ), so that the required domestic water temperature level for the daily sequence can be fixed to individual time points (t₁ ... tₙ), and **in that** the indicator (16) additionally displays the respective desired temperature as a function of the day.

2. Device according to Claim 1, **characterized in that** an operating element is provided, upon the actuation of which an activation of the heating of the domestic water and/or of a presettable maximum desired temperature takes place.

3. Device according to Claim 2, **characterized in that**, upon the actuation of the operating element, a timer is started, and, upon the expiry of the latter, a deactivation of the heating of the domestic water and/or of the presettable maximum desired temperature takes place.

4. Device according to Claim 1, **characterized in that** the allocator (14) is implemented by an operating element.

5. Device according to Claim 1, **characterized in that** the allocator (14) is implemented by means of the alternating operation of the desired-temperature presetting (12) and of the time presetting (10).

## Revendications

1. Dispositif de commande pour un chauffage d'eau sanitaire comportant une présélection de temps (10) permettant de présélectionner plusieurs instants (t₁...tₙ), une présélection de température de consigne (12) destinée à présélectionner une température de consigne (T₁) pour le chauffage de l'eau sanitaire, une affectation (14) qui affecte des températures de consigne (T₁...Tₙ) aux instants (t₁...tₙ), et un affichage (16) qui représente les instants (t₁...tₙ) du chauffage de l'eau sanitaire, le chauffage d'eau sanitaire étant intégré dans une installation de chauffage, alors que le réglage de l'installation de chauffage, alors que la présélection de l'instant (t₁) s'effectue au moyen d'une minuterie, la température de consigne (T₁) affectée au premier instant (t₁) étant valable jusqu'à un deuxième instant (t₂) qui le suit immédiatement,
**caractérisé en ce que**
des températures de consigne (T₁...Tₙ) souhaitées sont affectées aux instants respectifs (t₁...tₙ), de sorte que le niveau souhaité de température de l'eau sanitaire peut être fixé pour divers instants (t₁...tₙ) du cours de la journée, et l'affichage (16) présente en supplément la température de consigne respective en fonction du jour.

2. Dispositif selon la revendication 1,
**caractérisé par**
un élément de commande dont l'actionnement produit une activation du chauffage de l'eau sanitaire et/ou d'une température de consigne maximale présélectionnable.

3. Dispositif selon la revendication 2,
**caractérisé en ce que**
lors de l'actionnement de l'élément de commande, une minuterie est mise en marche et, pendant son déroulement, il se produit une désactivation du chauffage de l'eau sanitaire et/ou de la température maximale présélectionnable.

4. Dispositif selon la revendication 1,
**caractérisé en ce que**
l'affectation (14) est exécutée par un élément de commande.

5. Dispositif selon la revendication 1,
**caractérisé en ce que**
l'affectation (14) est réalisée avec la manoeuvre alternée de la présélection de la température de consigne (12) et de la présélection de temps (10).
